# EUROPEAN PATENT APPLICATION

(11) **EP 0 744 252 A1**
(43) Date of publication of application: **27.11.1996**
(21) Application number: 95939379.4
(22) Date of filing: 06.12.1995
(51) Int. Cl.: B25J 19/00

(54) **SEAL DEVICE FOR ROTARY PORTION, AND INDUSTRIAL ROBOT PROVIDED AT ROTARY PORTION THEREOF WITH SEAL DEVICE**

(30) Priority: 07.12.1994 JP 331298/94
(71) Applicant: KABUSHIKI KAISHA YASKAWA DENKI, Kitakyushu-Shi Fukuoka 806 (JP)
(72) Inventor: TSUKUDA, Kouji, c/o K.K. Yaskawa Denki, Kitakyushu-shi, Fukuoka 806 (JP); NAKAKO, Toru, c/o K.K. Yaskawa Denki, Kitakyushu-shi, Fukuoka 806 (JP); TANIMURA, Hideki, c/o K.K. Yaskawa Denki, Kitakyushu-shi, Fukuoka 806 (JP)
(74) Representative: Goddar, Heinz J., Dr.
(86) International application number: JP9502493
(87) International publication number: WO9617713

(57) **Abstract**

An annular spring (8) is fitted onto an outer peripheral surface of a cylindrical portion (4a) of a seal ring (4) in a manner to push an inner peripheral surface of the cylindrical portion (4a) toward a shaft (3), and a flange portion of the seal ring (4) is held between an axial end face of a frame (1) and a cover (5) to fix the seal ring (4) to the frame (1). The seal ring can be fixed and removed in a simple, positive and inexpensive manner, for example, by a frame and a cover of an industrial robot without the use of separate parts.

## Description

### [Technical Field]

The present invention relates to seal devices for rotatable parts or components having a seal member disposed between a stationary section and its associated rotary section, and also to industrial robots with such seal devices at rotary sections thereof.

### [Technical Background]

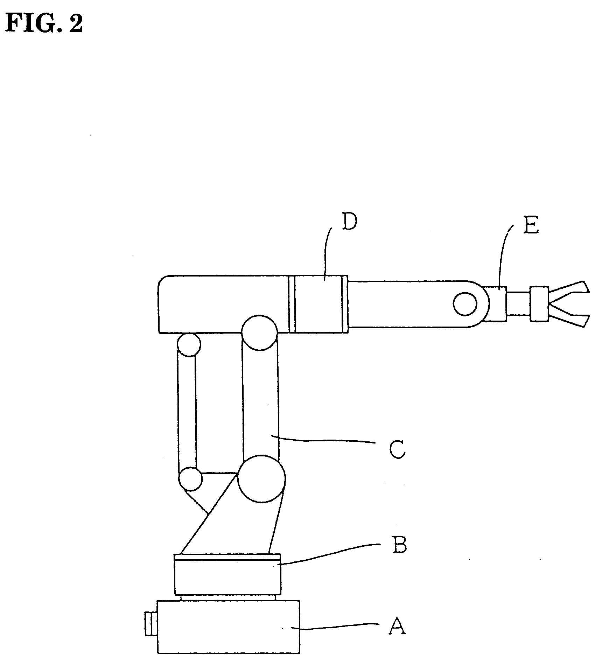

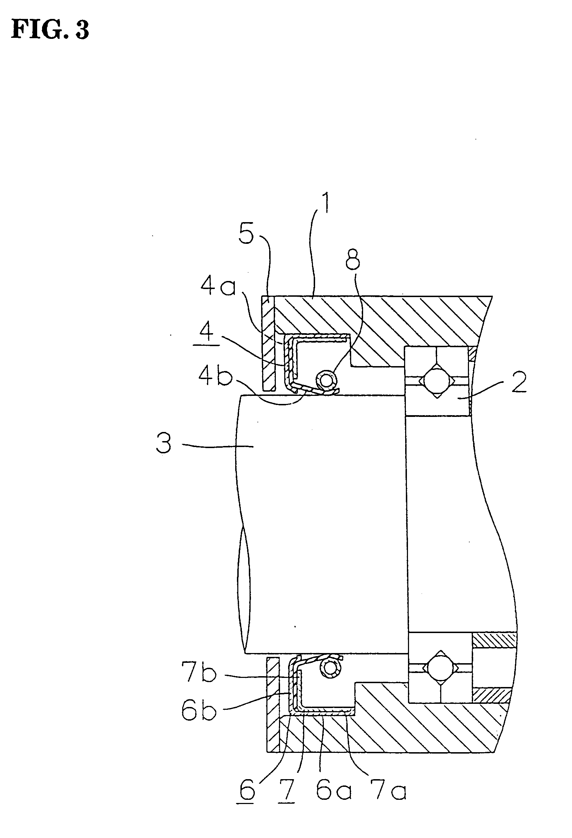

Fig. 2 shows one typical industrial robot having seal devices at rotary sections thereof, wherein the reference character "A" designates a fixed base, "B" denotes a swivel base movably mounted on the upper section of the fixed base, "C" indicates a first arm rotatably attached to the swivel base, "D" is a second arm also rotatably coupled to a free end of the first arm, and "E" indicates a wrist rotatably coupled to a free end of the second arm. See Fig. 3, which shows one seal device that may be arranged at any one of the arms and wrist. In this drawing, the numeral 1 designates a frame that serves as a stationary section for constituting one of the arms and wrist, whereas 2 indicates a bearing as attached on the inner circumferential surface of the frame 1, said bearing supporting a shaft 3 acting as a drive shaft for the wrist, for example, while allowing shaft 3 to remain rotatable. Numeral 4 denotes an annular seal ring which has a cylindrical section 4a and a flange section 4b and which is made of a chosen material with high wear resistance and/or solvent barrier characteristics; 5 is a cover for protection of the interior of said frame 1, said cover being attached to the end of frame 1. Numerals 6, 7 designate metal rings consisting of tubular sections 6a, 7a and bottom sections 6b, 7b having shaft holes centrally defined therein. The flange section 4b of seal ring 4 is inserted and held by caulking between bottom sections 6b, 7b, while tubular sections 6a, 7a are inserted by compression into the gap between said bearing and cover so that they are compressively contacted with the inner circumferential surface of frame 1. Numeral 8 indicates an annular spring, which is attached to the outer peripheral surface of cylindrical section 4a of seal ring 4, causing the inner circumferential surface of tubular section 4b to be pressed toward shaft 3. With such an arrangement, even when contaminants including dust, water, solvents such as coating/painting materials or the like appear to be ready to enter or "invade" the interior of the robot through gaps as possibly defined between frame 1 and shaft 3, such contaminants will no longer be able to enter the inside of the robot because seal ring 4 will be in contact with the outer peripheral surface of shaft 3 in any event.

The prior art suffers from the following problems:
(1) Seal ring 4 remains costly, as it is caulked by and held between metal rings 6, 7. In addition, since metal rings 6, 7 are of greater diameter, it is required that the inner circumferential surface of frame 1 be increased accordingly, making fabrication more difficult.
(2) Due to the structure in which tubular sections 5a, 6a of metal rings 5, 6 are compressively inserted to contact the inner circumferential surface of frame 1, greater accuracy in size determination is required, which may in turn lead to a risk of tolerance variations in the outer diameter to adversely affect the assembly thereof. Furthermore, such compressive insertions of metal rings 5, 6 will hinder disassembly, thus reducing exchangeability during maintenance.
(3) The joint planes of metal rings 5, 6, on which they are in direct contact with each other, are bare metal which will degrade the sealing performance.

### [Disclosure of the Invention]

Accordingly, it is an object of the present invention to provide a sealing method capable of attaining enhanced sealing performance while allowing a sealing member to be less costly, smaller, and easier to disassemble.

To attain the foregoing object, the present invention provides a seal device for rotary components comprising a cylindrical frame, a shaft rotatably supported by a bearing on the inner circumferential surface of said frame, a ring-shaped cover attached to one of the longitudinally opposed edge portions of said frame, and a cylindrical seal ring disposed between said bearing and said cover and having at a cylindrical section thereof a flange section made of a chosen material with high wear resistance, wherein an annular spring is provided on the outer periphery of the cylindrical section of said seal ring for pressing the inner circumferential surface of said cylindrical section toward said shaft, while allowing the flange section to be held between the edge of said frame and said cover causing said seal ring to be fixed to said frame.

The present invention also provides an industrial robot with a seal device at rotatable parts or components for actuation of one arm and a wrist, wherein said seal device comprises a cylindrical frame, a shaft rotatably supported by a bearing on the inner circumferential surface of said frame, a ring-shaped cover attached to one of the longitudinally opposed edge portions of said frame, and a cylindrical seal ring disposed between said bearing and said cover and having, at a cylindrical section thereof, a flange section made of a chosen material having high wear resistance, and wherein an annular spring is arranged on the outer periphery of the cylindrical section of said seal ring for pressing the inner circumferential surface of said cylindrical section toward said shaft, while allowing the flange section to be held between the edge of said frame and said cover causing said seal ring to be fixed to said frame.

Significant advantages of the present invention as derived from the aforesaid aspects thereof are as follows:
(1) It is possible, without the use of any extra parts or components, to assemble and disassemble the seal ring easily and reliably at lower costs by use of a combination of frame and cover of industrial robots, for example. Also, since the frame no longer requires cutting operations for fabrication of its inner circumferential surface, the manufacture thereof remains simpler.
(2) Attachment of the seal ring requires little or no limitations in determination of radial size, enabling members and parts to be free from any strict requirements regarding high dimensional accuracy.
(3) No direct contact of sealed sections with exposed metal surfaces is present, thus enhancing the sealing performance.

### [Brief Description of the Drawings]

Fig. 1 is a diagram showing a side cross-sectional view of a seal device in accordance with one preferred embodiment of the present invention. Fig. 2 is a side view of an industrial robot. Fig. 3 illustrates a side cross-section of one prior art seal device.

### [Best Mode for Carrying Out the Invention]

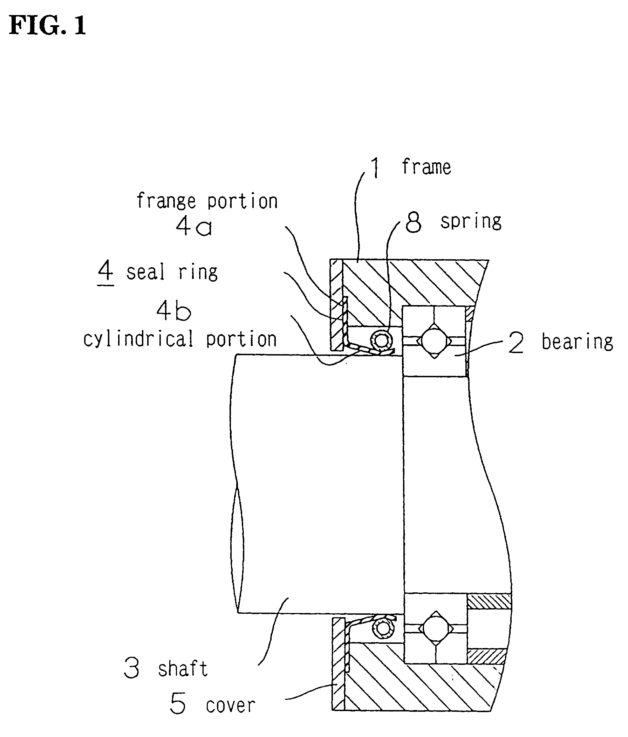

One preferred embodiment of the present invention will now be described with reference to the accompanying drawing. Fig. 1 is a diagram showing a side cross-section of a seal device embodying the invention. In Fig.1, the numeral 1 designates a frame which acts as a stationary section constituting one arm and wrist of an industrial robot; numeral 2 indicates a bearing that is attached on the inner circumferential surface of frame 1 to rotatably support a shaft 3 serving as a drive shaft for the wrist or the like. Numeral 4 denotes a cylindrical seal ring which has a cylindrical section 4a and a flange section 4b made of a chosen material with high wear resistance and/or solvent barrier characteristic; 5 is a cover for protection of the interior of frame 1, said cover being attached to the end of frame 1. Seal ring 4 is arranged so that flange section 4b is interposed between a longitudinal end surface of said frame 1 and cover 5, while an annular spring 8 is put on the outer peripheral surface of cylindrical section 4a so that spring 8 presses the inner circumferential surface of cylindrical section 4a toward said shaft 3.

In the illustrative arrangement, even when contaminants such as dust, water, solvent approach the interior of the robot through gaps as possibly defined between the frame 1 and shaft 3, such contaminants can no longer enter the inside of the robot because seal ring 4 is always in contact with the outer peripheral surface of shaft 3.

It should be noted that the seal device in accordance with the present invention may be applied not only to industrial robots but also to other equipment, including machine tools, electric motors and others.

### [Industrial Applicability]

The present invention is adaptable for use in the field of industrial robots to prevent contaminants such as dust, water, coating/painting solvents or the like from entering rotary sections thereof.

## Claims

1. A seal device for rotary components comprising a cylindrical frame, a shaft rotatably supported by a bearing on an inner circumferential surface of said frame, a ring-shaped cover attached to one of the longitudinally opposed edges of said frame, and a cylindrical seal ring disposed between said bearing and said cover and having at a cylindrical section thereof a flange section made of a chosen material with high wear resistance,
characterized in that an annular spring is on an outer periphery of the cylindrical section of said seal ring for pressing the inner circumferential surface of said cylindrical section toward said shaft while allowing the flange section to be held between the edge of said frame and said cover causing said seal ring to be fixed to said frame.

2. An industrial robot with a seal device at rotatable components for actuation of one of an arm and *a wrist, wherein said seal device comprises a* cylindrical frame, a shaft rotatably supported by a bearing on an inner circumferential surface of said frame, a ring-shaped cover attached to one of the longitudinally opposed edges of said frame, and a cylindrical seal ring disposed between said bearing and said cover and having at a cylinder section thereof a flange section made of a chosen material with high wear resistance, and wherein an annular spring is on an outer periphery of the cylinder section of said seal ring for pressing the inner circumferential surface of said cylindrical section toward said shaft while allowing the flange section to be held between the edge of said frame and said cover causing said seal ring to be fixed to said frame.
